# EUROPEAN PATENT SPECIFICATION

(11) **EP 0 931 755 B1**
(45) Date of publication and mention of the grant of the patent: **23.05.2001**
(21) Application number: 98200215.6
(22) Date of filing: 26.01.1998
(51) Int. Cl.: B66C 1/00

(54) **Apparatus for manipulating heavy objects, such as, for instance, frames and doors, and rail transport system**
Vorrichtung für die Handhabung schwerer Gegenstände wie zum Beispiel Rahmen und Türen, und Schienenförderanlage
Dispositif pour la manutention d'objets lourds tels que par exemple des cadres et des portes, et système de transport sur rails

(43) Date of publication of application: 28.07.1999
(73) Proprietor: Westo Engineering-Machinebouw, 7039 CA Stokkum (NL)
(72) Inventor: Welling, Theodorus Reinardus, 7039 CA Stokkum (NL); Welling, Hubertus Theodorus Reinardus, 7041 AK 's-Heerenberg (NL)
(74) Representative: Smulders, Theodorus A.H.J., Ir.

(56) References cited:
- DE-B- 1 153 683
- GB-A- 1 259 977
- US-A- 2 645 186
- US-A- 4 615 273
- US-A- 4 911 281
- US-A- 4 915 012
- PATENT ABSTRACTS OF JAPAN vol. 011, no. 014 (M-553), 14 January 1987 & JP 61 188311 A (MITSUBISHI ELECTRIC CORP), 22 August 1986

## Description

The invention relates to an apparatus for manipulating heavy objects, such as for instance frames, windows and doors, which objects are suspended from a trolley of a rail transport system comprising a transport rail which is suspended.

In the manufacture of frames, windows, doors and/or like heavy objects, the transport of these objects through a factory building is often realized by means of a rail transport system comprising a transport rail which is suspended. By means of fasteners, the objects are attached to a trolley, which trolley is movable through or over a transport rail. The fasteners by means of which for instance a frame is suspended from the trolley can for instance be formed by a number of assemblies of a yoke, a hook and an eye. When operations have to be performed on an object, such as for instance the assembling of windows and doors in a frame, the object should be uncoupled from the trolley and placed on the floor or on a working surface. In the case of frames, such working surface can for instance be formed by a number of trestles. In itself, the assembling operations can often be performed by one person. However, for instance in the case of frames, the objects are so heavy that uncoupling the object from the trolley and placing the object on a working surface cannot be carried out by one person. Under the current legislation regarding working conditions, it is sometimes even necessary to perform the lifting operation with two to eight persons. This large number of persons should therefore interrupt their normal activities in order to assist in lifting, after which the normal activities can be resumed. Hence, in the known method, the normal labor process is seriously interrupted on a regular basis, which has an adverse effect on the productivity.

It is the object of the invention to provide an apparatus by means of which the heavy objects can easily be placed on a working or supporting surface without requiring the involvement of manpower.

To this end, the invention provides an apparatus for manipulating heavy objects, such as for instance frames, windows and doors, which objects are suspended from a trolley of a rail transport system comprising a transport rail which is suspended, the apparatus being characterized by a frame comprising a standard having a bottom end and a top end, the standard being connected, near the bottom end thereof, to a base element so as to be pivotable around an axis, which base element is arranged on a floor, the axis extending substantially in horizontal direction, the standard comprising, near the top end thereof, a rail segment which in an erect position of the standard is fittingly received in an interruption of the transport rail to enable transport of the trolley along the interruption, at least a part of the standard forming, in a substantially horizontal position of the standard, a supporting surface for the object.

Via the transport rail, the object attached to the trolley can be conveyed through the factory building in which the rail transport system is located. When the trolley is located at the rail segment, the pivotally disposed standard, together with the rail segment mounted thereon, can be moved around the axis from the erect position into a substantially horizontal position or into a position between the erect and the horizontal position. In these positions, the standard forms a supporting surface for the object. In these positions, the desired operations can be performed on the object, such as for instance assembling windows and doors in a frame. After the operations have been performed, the standard can be brought into the erect position again, so that the rail segment is again fittingly received in the interruption of the transport rail, to enable transport of the trolley again from the rail segment to the other part of the transport rail.

With the apparatus according to the invention, a heavy object such as for instance a frame can easily be moved by one person from the rail transport system into a position in which operations can be performed on the heavy object. By means of the apparatus according to the invention, the heavy object can be brought into the operating position in a particularly simple and moreover particularly quick manner.

In accordance with a further elaboration of the invention, the apparatus may comprise a drive mechanism and a crank-connecting rod mechanism for pivoting the standard around the axis, the crank-connecting rod mechanism being designed so that the crank and the connecting rod extend parallel to each other when the standard is in the erect position and in the substantially horizontal position.

With such crank-connecting rod mechanism, the standard moves particularly slowly near the erect position and near the substantially horizontal position of the standard, while in the intermediate positions, the movement is relatively quick. Moreover, the play which the standard has in these extreme positions is minimal when the crank-connecting rod mechanism is of a design as described hereinabove. Due to the fact that in the erect and horizontal positions of the standard, the crank and the connecting rod extend parallel to each other, the drive mechanism can drive the crank-connecting rod mechanism at a constant speed, while the movement of the standard slows down near the erect position and the substantially horizontal position. Owing to the crank-connecting rod mechanism as described hereinabove, the control of the drive mechanism may be of a simple design.

In accordance with a further elaboration of the invention, the standard may comprise a top part of which the top end forms a part, and a bottom part of which the bottom end forms a part, the top part being adjustable in line with the bottom part, so that, at least in an erect position of the standard, the height of the rail segment relative to the floor can be varied.

With an apparatus of such design, the object on which the operations are to be performed can first be lowered over a certain distance by adjusting the top part relative to the bottom part in downward direction. Next or simultaneously, the pivotal movement of the standard can be started for moving the standard from the erect position into the substantially horizontal position. It can thus be provided that the object is located above the base element when the standard is in the substantially horizontal position, which prevents the apparatus from getting out of balance under the influence of the weight of the heavy object, and as a result of which the supporting surface has only the minimally required dimensions.

It is readily understood that there are different driving possibilities for adjusting the top part relative to the bottom part of the standard. Two of these possibilities are described in the subclaims and will hereinbelow be further clarified with reference to two exemplary embodiments.

Optionally, in accordance with a further elaboration of the invention, the apparatus may further comprise a locking device intended for locking the top part relative to the bottom part in a certain adjusting position. Such locking device is important in particular when the adjustment of the top part relative to the bottom part is effected by means of a pneumatic piston/cylinder assembly. As it is, the position of the piston relative to the cylinder will change when the standard is moved from the erect position into the substantially horizontal position, because the weight resting on the piston of the piston/cylinder assembly changes during the pivotal movement of the standard. To prevent the object which is to be processed from shifting over the supporting surface of the standard and being damaged thereby when the standard is in an oblique or horizontal position, the locking device as mentioned hereinabove is provided.

Optionally, the standard may comprise arms pivotally connected to the standard, for the purpose of enlarging the supporting surface for the object.

To prevent the trolley from running from the rail segment when the trolley is at the location of the rail segment, in accordance with a further elaboration of the invention, the rail segment may comprise two controllable blocking pins which are located adjacent the free ends of the rail segment and which can be brought into a blocking position and a release position. In the blocking position, it is impossible that the trolley passes the blocking pin. In positions other than the erect position of the standard, the blocking pins will be in the blocking position. Only when the standard adopts the erect position and the rail segment is fittingly received in the interruption of the transport rail can the pins be brought into the release position, allowing the trolley to move from the rail segment into the transport rail of the rail transport system.

The invention also relates to a rail transport system comprising a transport rail which is suspended and a trolley which is movable through or over the transport rail and which comprises fasteners for attaching objects to be conveyed to the trolley, the rail transport system also comprising at least one apparatus according to the invention as described hereinabove, while an interruption is provided in the transport rail, in which interruption the rail segment of the apparatus according to the invention is fittingly received when the apparatus is in the erect position, enabling transport of the trolley along the interruption, the ends of the transport rail which bound the interruption comprising controllable blocking pins which can be brought into a blocking position and a release position.

Due to the presence of the controllable blocking pins adjacent the ends of the transport rail which bound the interruption, it is impossible for next objects suspending from a next trolley to fall from the transport rail when the rail segment is not located in the interruption. After all, when the rail segment is not located in the interruption, the controllable blocking pins adjacent the ends of the transport rail which bound the interruption will be in the blocking position, so that a trolley cannot pass these blocking pins. In summary, all blocking pins associated with the apparatus will hence be in the blocking position before the rail segment is moved out of the interruption.

In some cases, the center of gravity of an object may shift under the influence of the operations to which such object is subjected. When the object is suspended from a trolley of a rail transport system comprising a transport rail which is suspended, such a shift of the center of gravity may cause the object to tilt. In the known rail transport systems, this problem is solved by displacing the suspension point of the object. In general, this implies that the suspension eye provided in the object, such as for instance a frame, should be displaced. This is a laborious and time-consuming operation. To solve the above-outlined problem, the invention provides a rail transport system comprising a transport rail which is suspended and a trolley which is movable through or over the transport rail in a longitudinal direction of the trolley, the trolley comprising fasteners for attaching an object to be transported to the trolley, which rail transport system according to the invention is characterized in that the fasteners are adjustable in longitudinal direction relative to the trolley. Because of the possibility of adjusting the fasteners in the longitudinal direction of the trolley, the shift of the center of gravity resulting from the operations performed on the object can be compensated for, so that also after these operations, the trolley is still centrally loaded and movable through the transport rail without any problems.

In accordance with a further elaboration of the invention, the fasteners can be adjustable in longitudinal direction relative to the trolley in that a yoke is mounted on the trolley, which yoke has a downwardly facing side carrying the fasteners and whose upwardly facing side is provided with a slot in which the end of a support rod is accommodated so as to be adjustable in longitudinal direction, which support rod is fixedly connected to the trolley.

The invention will hereinafter be further explained on the basis of a number of exemplary embodiments, with reference to the accompanying drawings.
Figs. 1 and 2 are a side elevational view and a front view respectively of a first exemplary embodiment of the apparatus, with the standard in the erect position;
Fig. 3 is a side elevational view of the exemplary embodiment shown in Figs. 1 and 2, with the standard in a substantially horizontal position;
Figs. 4 and 5 are a side elevational view and a front view respectively of a second exemplary embodiment of an apparatus according to the invention;
Figs. 6 and 7 are a side elevational view and a front view respectively of a crank-connecting rod mechanism by means of which the position of the standard is determined;
Fig. 8 is a front view of an exemplary embodiment of the transport rail at the location of the interruption in which the rail segment is fittingly received;
Fig. 9 is a sectional view taken on the line IX-IX in Fig. 8, wherein, however, the rail segment is not received in the interruption;
Fig. 10 is a sectional view of the top end of the standard of the apparatus at the location of the rail segment;
Fig. 11 is a front view of a portion of a transport rail of a rail transport system; and
Fig. 12 is a sectional view taken on the line XII-XII in Fig. 11.

In so far as they correspond to each other, the reference numerals used in the different Figures refer to the same parts.

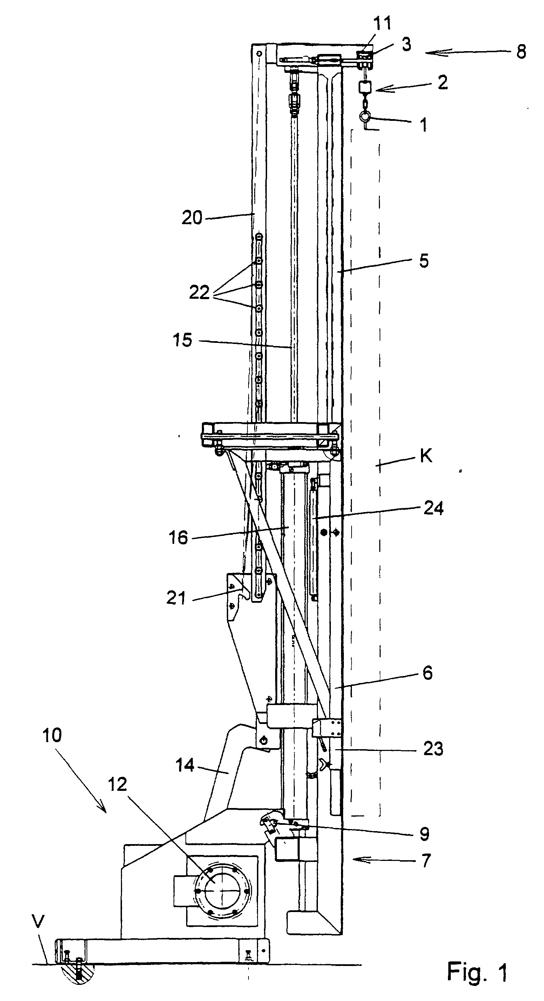

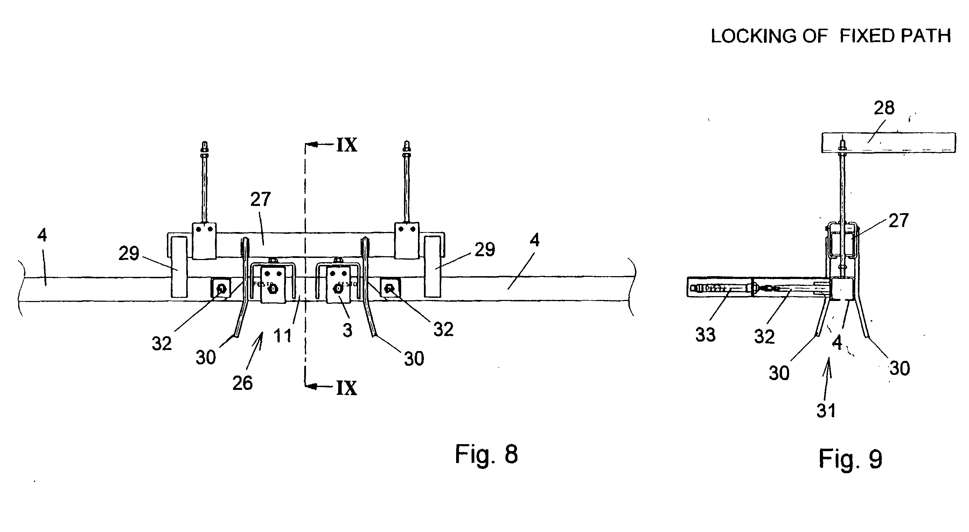

The exemplary embodiments shown in Figs. 1-5 are all apparatuses for manipulating heavy objects, such as frames, windows and doors K. In Fig. 1, the frame K is shown in dotted lines. Hereinbelow, reference will in each case be made to a frame K. However, it is understood that the invention is not limited to an apparatus for manipulating frames K, but is also suitable for manipulating other heavy objects. Screwed into the frame K is an eye 1 which is connected, via fasteners 2, to a trolley 3 of a rail transport system comprising a transport rail 4 which is for instance shown in Figs. 8 and 9.

All exemplary embodiments shown of the apparatus according to the invention comprise a frame having a standard 5, 6. The standard 5, 6 has a bottom end 7 and a top end 8. Adjacent the bottom end 7, the standard 5, 6 is connected to a base element 10 for pivoting around an axis 9, which base element is disposed on a floor V. The axis 9 extends substantially in horizontal direction. The standard 5, 6 comprises, near the top end 8 thereof, a rail segment 11 which, in an erect position of the standard 5, 6, is fittingly received in an interruption 26 of the transport rail 4, at least when the top part 5 is in a specific, determined position relative to the bottom part 6. When the rail segment 11 is fittingly received in this interruption 26, transport of the trolley 3 along the interruption 26 is possible. In a substantially horizontal position of the standard 5, 6, at least a part of the standard 5, 6 forms a supporting surface S for the frame K.

The exemplary embodiments shown in Figs. 1-5 comprise a drive motor 12 and a crank-connecting rod mechanism 13, 14 for pivoting the standard 5, 6 around the axis 9. The crank-connecting rod mechanism 13, 14 is of such design that the crank 13 and the connecting rod 14 extend parallel to each other when the standard 5, 6 is in the erect position and in the substantially horizontal position.

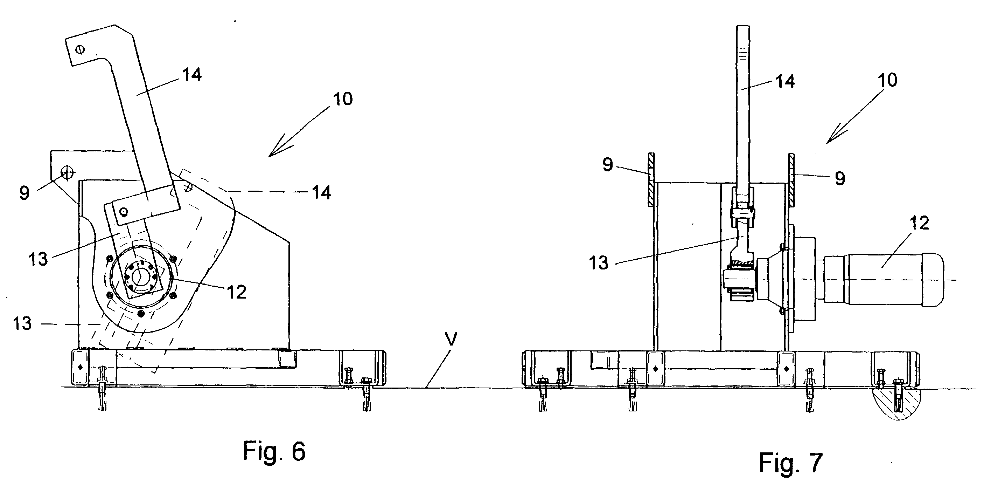

Figs. 6 and 7 show the base element 10 in side elevational view and front view respectively, with the standard 5, 6 left out. In Fig. 6, a portion of the sheet-metal work has been broken away for a clear view of the position of the crank 13 and the connecting rod 14. The position of the crank 13 and the connecting rod 14 when the standard 5, 6 is in the erect position is shown in full lines. Fig. 6 moreover shows, in dotted lines, the position of the crank 13 and the connecting rod 14 when the standard 5, 6 is in the substantially horizontal position. In particular Fig. 6 demonstrates clearly that the crank 13 and the connecting rod 14 extend parallel to each other when the standard 5, 6 is in the erect position and in the substantially horizontal position.

The two exemplary embodiments of Figs. 1-5 comprise a standard 5, 6 which is built up of a top part 5, of which the top end 8 forms a part, and a bottom part 6, of which the bottom end 7 forms a part. The top part 5 is adjustable in line with the bottom part 6, so that, in an erect position of the standard 5, 6, the height of the rail segment 11 relative to the floor V can be varied.

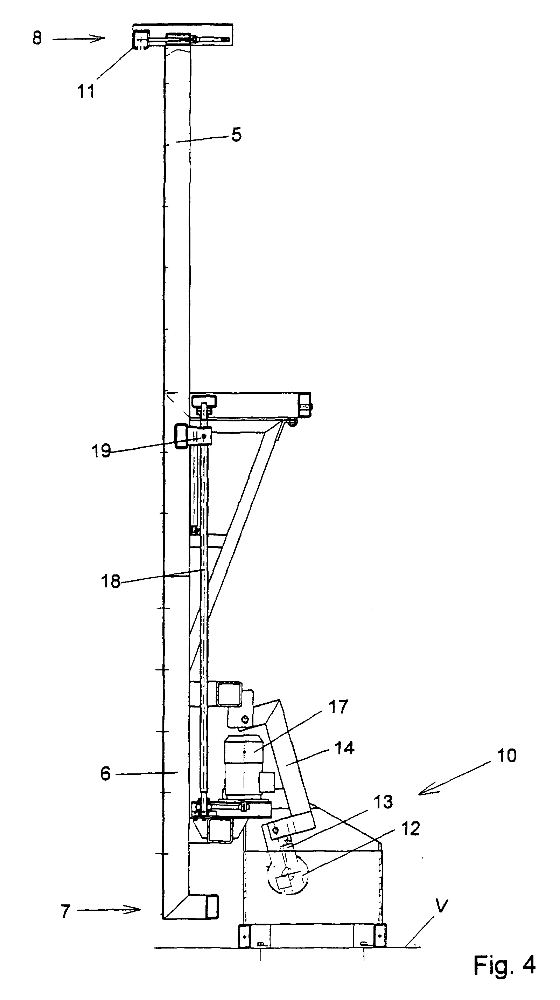

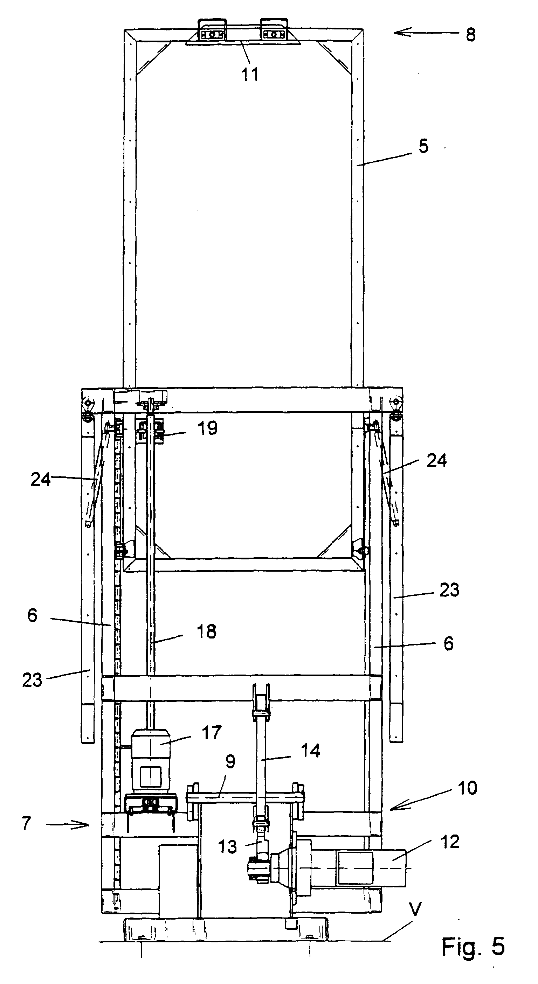

The exemplary embodiments of Figs. 1-3 on the one hand and Figs. 4, 5 on the other differ with regard to the manner in which the adjustment of the top part 5 relative to the bottom part 6 is effected. For this adjustment, in the exemplary embodiment shown in Figs. 1-3, the apparatus comprises a piston/cylinder assembly 15, 16. The cylinder 16 is fixedly connected to the bottom part 6 and the piston 15 is fixedly connected to the top part 5. Through energization of the piston/cylinder assembly 15, 16, the top part 5 is adjusted relative to the bottom part 6.

For the purpose of adjusting the top part 5 relative to the bottom part 6, in the exemplary embodiment of Figs. 4 and 5, the apparatus comprises a second drive motor 17 and a spindle 18. The rotatable spindle 18 is driven by the drive motor 17 and is connected to the bottom part 6 so as to be fixed in axial direction. The apparatus also comprises a travel nut 19, cooperating with the spindle 18 and fixedly connected to the top part 5 of the standard 5, 6. Rotation of the spindle 18 by means of the drive motor 17 effects an adjustment of the top part 5 relative to the bottom part 6 of the standard 5, 6.

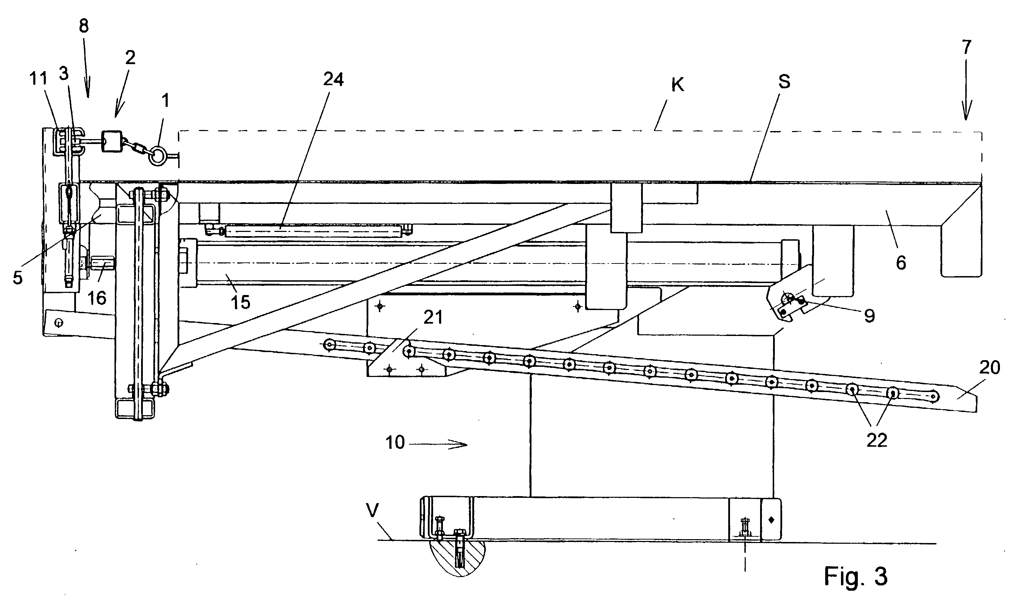

In particular when, for adjustment, a piston/cylinder assembly 15, 16 as shown in Figs. 1-3 is used, it is important to secure the top part 5 relative to the bottom part 6 when the standard 5, 6 is moved from the erect position into the substantially horizontal position. To that end, the apparatus of Figs. 1-3 comprises a securing device constructed as a locking element 20, 21. The locking element 20, 21 comprises a locking arm 20 which is pivotally connected to the top part 5 of the standard 5, 6, and a locking hook 21 which is fixedly connected to the bottom part 6. The locking arm 20 has a number of cross bars 22 that can catch behind the hook 21. As different cross bars 22 have been provided, distributed over the length of the locking arm 20, the top part 5 can be locked in different adjusting positions relative to the bottom part 6. As the locking arm 20 is pivotally connected to the top part 5, the locking arm 20 automatically slips into a locking position when the standard 5, 6 is pivoted from the erect position into the horizontal position. Fig. 3 clearly shows the locked position of the locking arm 20.

In order to enlarge the supporting surface 5 of the standard 5, 6, the standard 5, 6 in the present exemplary embodiments comprises arms 23 which are pivotally connected to the standard 5, 6. By means of piston/cylinder assemblies 24, these arms 23 can be moved from a folded-in position into a folded-out position. If so desired, the arms 23 can be of a telescopic construction, so that the lengths thereof can be varied.

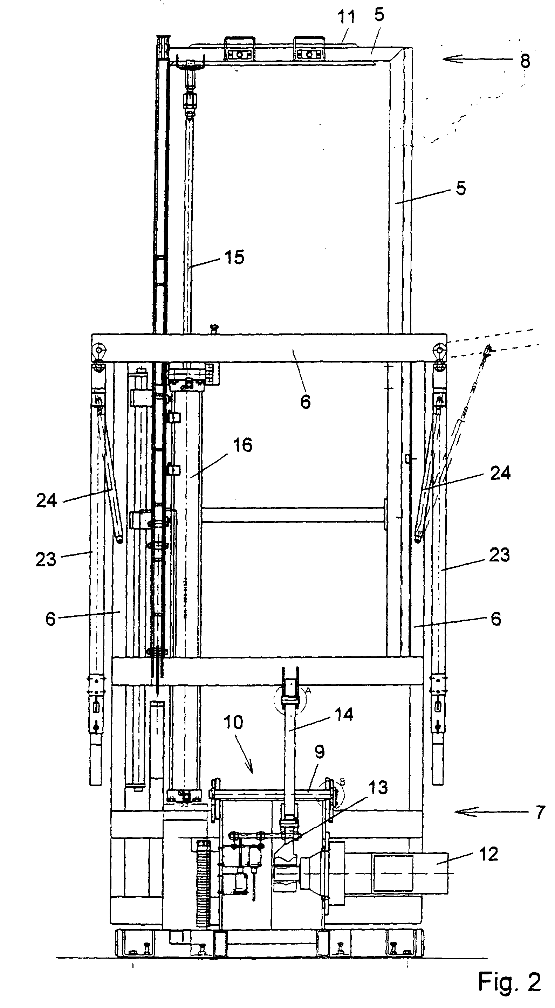

The exemplary embodiments shown in Figs. 1-5 have a standard 5, 6 which, in front view, has a considerable width due to the fact that both the top part 5 and the bottom part 6 are designed as a rectangular frame. This is clearly visible in Figs. 2 and 5. In order to increase the accessibility to the object to be processed, such as for instance a frame K, the standard may also be designed as two frame beams which are relatively slender and which are adjustable in line with each other. To enlarge the supporting surface, a number of pivot arms may be mounted on these frame beams.

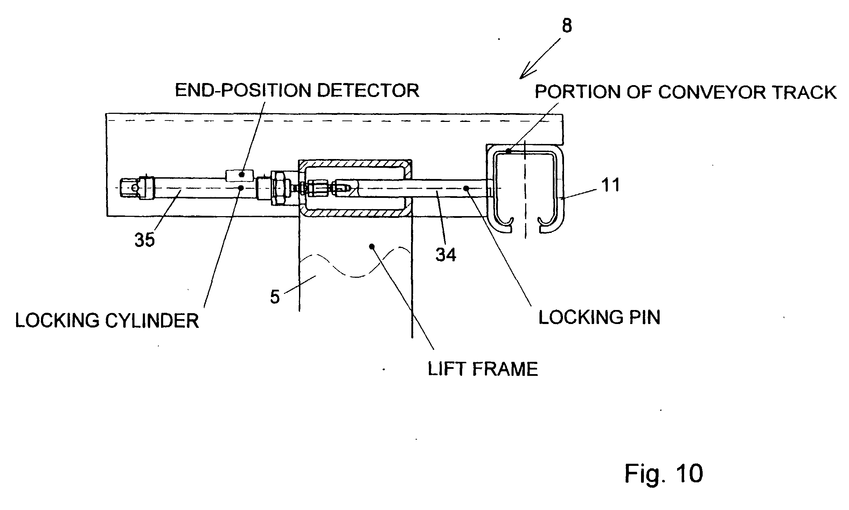

Via the two connecting pieces 29, the bridging element 27 is connected to the free ends of the transport rail 4 which are located on either side of the interruption 26. The bridging element 27 also comprises four guide rods 30 forming a funnel 31 into which the rail segment 11 can be moved. The presence of the funnel 31 causes the rail segment 11, when moving upwards, to be accurately positioned relative to the transport rail 4. As the free ends of the transport rail 4 at the location of the interruption 26 and the free ends of the rail segment 11 are finished at an angle, an optimal positioning of the rail segment 11 relative to the transport rail 4 is also realized in longitudinal direction of the transport rail 4. To prevent the trolley 3 from which the object K is suspended from running out of the transport rail 4 when the rail segment 11 is not received in the interruption 26, the transport rail 4 is provided, at the free ends at the location of the interruption 26, with controllable blocking pins 32 which can be brought into a blocking position and a release position. The pins 32 are controlled by a pneumatic piston/cylinder assembly 33. The above arrangement is clearly visible in Fig. 9. The blocking pins 34 and the piston/cylinder assembly 35 are clearly visible in Fig. 10.

When the trolley 3 is in the rail segment 11 and the standard 5, 6 is moved from the erect position into the substantially horizontal position, the trolley 3 should also be prevented from running from the rail segment 11. For this purpose, in accordance with a further elaboration of the invention, the rail segment is provided, near the free ends thereof, with two controllable blocking pins 34 which can be moved into a blocking position and a release position. The position of the blocking pins 34 is controlled by means of a piston/cylinder assembly 35. Before the rail segment 11 is moved out of the interruption 26, the blocking pins 34 and 32 are moved into the blocking position by the piston/cylinder assemblies 35 and 33 respectively. Only when the rail segment 11 has been moved into the interruption 26 again, are the blocking pins 34 and 32 moved into the release position, allowing the trolley 3 to continue its path over the transport rail 4.

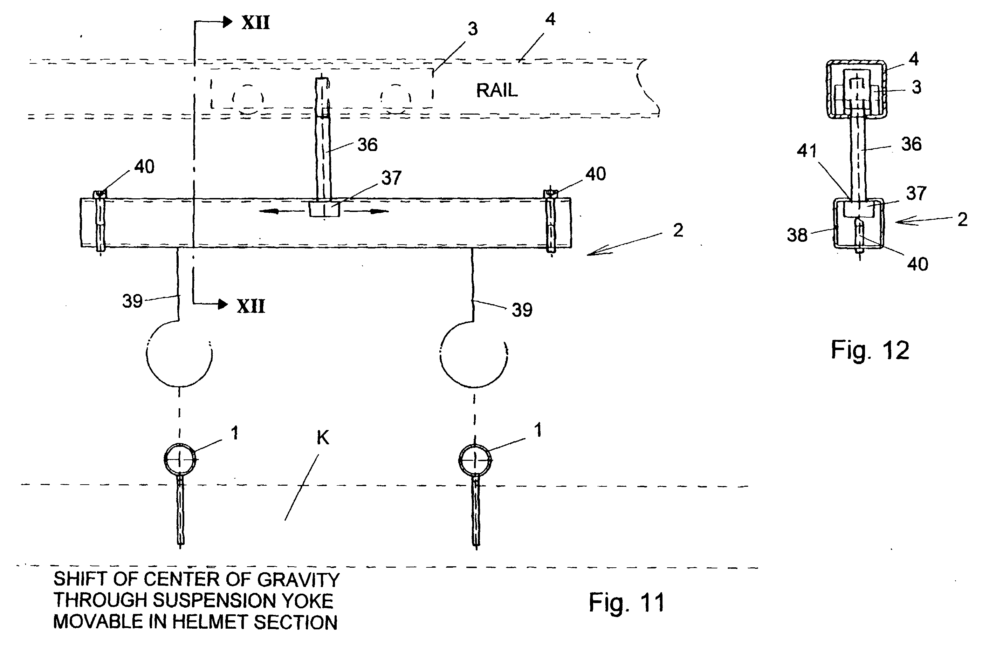

Finally, Figs. 11 and 12 further show an embodiment of fasteners 2 by means of which an object K can be fastened to a trolley 3 of a rail transport system. The rail transport system is provided with a transport rail 4 which is suspended and with a trolley 3 which is movable through or over the transport rail 4 in longitudinal direction of the trolley 3. The trolley 3 comprises fasteners 2 for fastening to the trolley 3 an object K to be transported. The fasteners 2 are designed so as to be adjustable in longitudinal direction relative to the trolley 3. This adjusting possibility in longitudinal direction of the trolley prevents the object K from tilting or the trolley 3 from being loaded unevenly when the center of gravity of the object K is shifted. Such a shift of the center of gravity may occur when for instance a door is mounted in a frame. The fasteners 2, adjustable in longitudinal direction relative to the trolley 3, provide the possibility of compensating for this shift of the center of gravity without requiring for instance displacement of an eye 1 screwed into the frame. In the exemplary embodiment shown in Figs. 11 and 12, the fasteners 2 are adjustable in longitudinal direction relative to the trolley 3 in that a yoke 38 is mounted on the trolley 3, which yoke 38 has a downwardly facing side carrying the suspension means and whose upwardly facing side is provided with a slot 41 in which the end of a support rod 36 is accommodated for sliding in longitudinal direction, which support rod 36 is fixedly connected to the trolley 3. The support rod 36 has its free end provided with a thickening 37 having such width that it cannot pass the slot 41. The yoke 38 has its free ends provided with stops 40 which prevent the support rod 36 from sliding from the yoke. The suspension means provided at the bottom side of the yoke 38 are designed as two hooks 39 capable of engaging eyes 1 screwed into the frame K. Upon a shift of the center of gravity, the yoke 38 need merely be shifted relative to the support rod 36, so that the center of gravity of the object K is located precisely under the support rod 36.

It is understood that the invention is not limited to the exemplary embodiments described, but that various modifications are possible within the purview of the invention, as defined by the claims.

## Claims

1. An apparatus for manipulating heavy objects, such as for instance frames, windows and doors, said objects (K) being suspended from a trolley (3) of a rail transport system comprising a transport rail (4) which is suspended, the apparatus having a frame comprising a standard (5, 6) having a bottom end (7) and a top end (8), the standard (5, 6) being connected, near the bottom end (7) thereof, to a base element (10) so as to be pivotable around an axis (9), which base element (10) is arranged on a floor (V), the axis (9) extending substantially in horizontal direction, the standard (5, 6) comprising, near the top end (8) thereof, a rail segment (11) which in an erect position of the standard (5, 6) is fittingly received in an interruption (26) of the transport rail (4) to enable transport of the trolley (3) along the interruption (26), at least a part of the standard (5, 6) forming, in a substantially horizontal position of the standard (5, 6), a supporting surface (S) for the object (K).

2. An apparatus according to claim 1, characterized by a drive mechanism (12) and a crank-connecting rod mechanism (13, 14) for pivoting the standard (5, 6) around the axis (9), the crank-connecting rod mechanism (13, 14) being designed so that the crank (13) and the connecting rod (14) extend parallel to each other when the standard (5, 6) is in the erect position and in the substantially horizontal position.

3. An apparatus according to claim 1 or 2, characterized in that standard (5, 6) comprises a top part (5) of which the top end (8) forms a part, and a bottom part (6) of which the bottom end (7) forms a part, the top part (5) being adjustable in line with the bottom part (6), so that, at least in an erect position of the standard (5, 6), the height of the rail segment (11) relative to the floor (V) can be varied.

4. An apparatus according to claim 3, characterized in that for adjusting the top part (5) relative to the bottom part (6), the apparatus comprises a piston/cylinder assembly (15, 16), the cylinder (16) being fixedly connected to the bottom part (6) and the piston (15) being fixedly connected to the top part (5) or vice versa.

5. An apparatus according to claim 3, characterized in that for adjusting the top part (5) relative to the bottom part (6), the apparatus comprises a second drive motor (17) and a spindle (18), the rotatable spindle (18) being connected to the bottom part (6) so as to be fixed in axial direction, a travel nut (19) cooperating with the spindle (18) being fixedly connected to the top part (5) or vice versa.

6. An apparatus according to any one of claims 3-5, characterized by a locking device (20, 21) intended for locking the top part (5) relative to the bottom part (6) in a certain adjusting position.

7. An apparatus according to any one of the preceding claims, characterized in that the standard (5, 6) comprises arms (23) pivotally connected to the standard, for enlarging the supporting surface for the object (K).

8. An apparatus according to any one of the preceding claims, characterized in that in the rail segment (11), which has two free ends, two controllable blocking pins (34) are provided adjacent said free ends, which blocking pins can be brought into a blocking position and a release position.

9. A rail transport system comprising a transport rail (4) which is suspended and a trolley (3) which is movable through or over the transport rail (4) and which comprises fasteners (1, 2) for attaching to the trolley (3) objects (K) to be conveyed, the rail transport system also comprising at least one apparatus according to any one of the preceding claims, with an interruption (26) being provided in the transport rail (4), in which interruption (26) the rail segment (11) of the apparatus according to any one of claims 1-8 is fittingly received when the standard (5, 6) is in the erect position, enabling transport of the trolley (3) along the interruption (26), the ends of the transport rail (4) which bound the interruption (26) comprising controllable blocking pins (32) which can be brought into a blocking position and a release position.

10. A rail transport system according to claim 9, comprising a transport rail (4) which is suspended and a trolley (3) which is movable through or over the transport rail (4) in a longitudinal direction of the trolley (3), the trolley (3) comprising fasteners (2) for attaching to the trolley an object (K) to be transported, the fasteners (2) being adjustable in longitudinal direction relative to the trolley (3).

11. A rail transport system according to claim 10, characterized in that the fasteners (2) are adjustable in longitudinal direction relative to the trolley (3) due to the fact that a yoke (38) is mounted on the trolley, which yoke has a downwardly facing side carrying the suspension means (39) and whose upwardly facing side is provided with a slot (41) in which the end (37) of a support rod (36) is accommodated for adjustment in longitudinal direction, said support rod (36) being fixedly connected to the trolley (3).

## Patentansprüche

1. Vorrichtung zum Handhaben schwerer Gegenstände, wie z.B. Rahmen, Fenster und Türen, wobei die Gegenstände (K) von einer Laufkatze (3) eines Schienentransportsystems mit einer aufgehängten Transportschiene (4) herabhängen, die Vorrichtung einen Rahmen hat, der eine Trägervorrichtung (5,6) mit einem unteren Ende (7) und einem oberen Ende (8) aufweist, die Trägervorrichtung (5,6) nahe ihrem unteren Ende (7) mit einem Sockelelement (10) derart verbunden ist, dass sie um eine Achse (9) schwenkbar ist, das Sockelelement (10) auf einem Boden (V) angeordnet ist, die Achse (9) im wesentlichen in horizontaler Richtung verläuft, die Trägervorrichtung (5,6) nahe ihrem oberen Ende (8) ein Schienensegment (11) aufweist, das in der aufrechten Position der Trägervorrichtung (5,6) passend in einer Unterbrechung (26) der Transportschiene (4) aufgenommen ist, um den Transport der Laufkatze (3) entlang der Unterbrechung (26) zu ermöglichen, und wobei mindestens ein Teil der Trägervorrichtung (5,6) in einer im wesentlichen horizontalen Position der Trägervorrichtung (5,6) eine Auflagefläche (S) für den Gegenstand (K) bildet.

2. Vorrichtung nach Anspruch 1, gekennzeichnet durch einen Antriebsmechanismus (12) und einen Kurbel-/Verbindungsstangen-Mechanismus (13,14) zum Schwenken der Trägervorrichtung (5,6) um die Achse (9), wobei der Kurbel-/Verbindungsstangen-Mechanismus (13,14) derart ausgebildet ist, dass die Kurbel (13) und die Verbindungsstange (14) parallel zueinander verlaufen, wenn die Trägervorrichtung (5,6) sich in der aufrechten Position und in der im wesentlichen horizontalen Position befindet.

3. Vorrichtung nach Anspruch 1 oder 2, dadurch gekennzeichnet, dass die Trägervorrichtung (5,6) einen oberen Teil (5), dem das obere Ende (8) zugehört, und einen unteren Teil (6) aufweist, dem das untere Ende (7) zugehört, wobei der obere Teil (5) in Linie mit dem unteren Teil (6) derart ausrichtbar ist, dass mindestens in der aufrechten Position der Trägervorrichtung (5,6) die Höhe des Schienensegments (11) relativ zu dem Boden (V) verändert werden kann.

4. Vorrichtung nach Anspruch 3, dadurch gekennzeichnet, dass zum Ausrichten des oberen Teils (5) relativ zu dem unteren Teil (6) die Vorrichtung eine Kolben-/Zylinder-Anordnung (15,16) aufweist, wobei der Zylinder (16) fest mit dem unteren Teil (6) und der Kolben (15) fest mit dem oberen Teil (5) verbunden ist, oder umgekehrt.

5. Vorrichtung nach Anspruch 3, dadurch gekennzeichnet, dass zum Ausrichten des oberen Teils (5) relativ zu dem unteren Teil (6) die Vorrichtung einen zweiten Antriebsmotor (17) und eine Spindel (18) aufweist, wobei die drehbare Spindel (18) derart mit dem unteren Teil (6) verbunden ist, dass sie in axialer Richtung festgelegt ist, und eine mit der Spindel (18) zusammenwirkende Spindelmutter (19) fest mit dem oberen Teil (5) verbunden ist, oder umgekehrt.

6. Vorrichtung nach einem der Ansprüche 3-5, gekennzeichnet durch eine Verriegelungsvorrichtung (20,21) zum Verriegeln des oberen Teils (5) relativ zu dem unteren Teil (6) in einer bestimmten Einstellposition.

7. Vorrichtung nach einem der vorhergehenden Ansprüche, dadurch gekennzeichnet, dass die Trägervorrichtung (5,6) schwenkbar an diese angelenkte Arme (23) zur Vergrößerung der Auflagefläche für den Gegenstand (K) aufweist.

8. Vorrichtung nach einem der vorhergehenden Ansprüche, dadurch gekennzeichnet, dass in dem Schienensegment (11), das zwei freie Enden aufweist, nahe den freien Enden zwei steuerbare Sperrstifte (34) vorgesehen sind, die in eine Sperrposition und eine Freigabeposition gebracht werden können.

9. Schienentransportsystem mit einer aufgehängten Transportschiene (4) und einer Laufkatze (3), die durch die Transportschiene (4) hindurch oder über diese bewegbar ist und die Befestigungselemente (1,2) zum Befestigen zu transportierender Gegenstände (K) an der Laufkatze (3) aufweist, wobei das Schienentransportsystem ferner mindestens eine Vorrichtung nach einem der vorhergehenden Ansprüche aufweist, wobei in der Transportschiene (4) eine Unterbrechung (26) ausgebildet ist, in der, wenn sich die Trägervorrichtung (5,6) in der aufrechten Position befindet, das Schienensegment (11) der gemäß einem der Ansprüche 1 bis 8 ausgebildeten Vorrichtung passend derart aufgenommen wird, dass ein Transport der Laufkatze (3) entlang der Unterbrechung (26) ermöglicht wird, wobei die Enden der Transportschiene (4), die die Unterbrechung (26) begrenzen, steuerbare Sperrstifte (32) aufweisen, die in eine Sperrposition und eine Freigabeposition gebracht werden können.

10. Schienentransportsystem nach Anspruch 9, mit einer aufgehängten Transportschiene (4) und einer Laufkatze (3), die in einer Längsrichtung der Laufkatze (3) durch die Transportschiene (4) hindurch oder über diese bewegbar ist, wobei die Laufkatze (3) zum Befestigen zu transportierender Gegenstände (K) an der Laufkatze vorgesehene Befestigungselemente (2) aufweist, die relativ zu der Laufkatze (3) in Längsrichtung einstellbar sind.

11. Schienentransportsystem nach Anspruch 10, dadurch gekennzeichnet, dass die Befestigungselemente (2) in Längsrichtung relativ zu der Laufkatze (3) mittels eines an der Laufkatze befestigten Jochs (38) einstellbar sind, das eine abwärtsgerichtete Seite aufweist, die die Aufhängungseinrichtung (39) trägt, und dessen aufwärtsgerichtete Seite mit einem Schlitz (41) versehen ist, in dem das Ende einer Haltestange (36) in Längsrichtung einstellbar aufgenommen ist, wobei die Haltestange (36) fest an der Laufkatze (3) befestigt ist.

## Revendications

1. Appareil de manutention d'objets lourds, par exemple de châssis, de fenêtres et de portes, ces objets (K) étant suspendus à un chariot (3) d'un système de transport à rail, qui comporte un rail de transport (4) qui est suspendu, l'appareil ayant un châssis qui comporte un poteau (5, 6) ayant une extrémité inférieure (7) et une extrémité supérieure (8), le poteau (5, 6) étant raccordé, près de son extrémité inférieure (7), à un élément de base (10) afin qu'il puisse pivoter autour d'un axe (9), l'élément de base (10) étant disposé sur un plancher (V), l'axe (9) s'étendant pratiquement en direction horizontale, le poteau (5, 6) comprenant, près de son extrémité supérieure (8), un segment de rail (11) qui, en position dressée du poteau (5, 6), est logé de manière ajustée dans une interruption (26) du rail de transport (4) pour permettre le transport du chariot (3) le long de l'interruption (26), une partie au moins du poteau (5, 6) formant, dans une position pratiquement horizontale du poteau (5, 6), une surface (S) de support pour l'objet (K).

2. Appareil selon la revendication 1, caractérisé par un mécanisme d'entraînement (12) et un mécanisme (13, 14) à tige de raccordement de manivelle destinés à faire pivoter le poteau (5, 6) autour de l'axe (9), le mécanisme (13, 14) à tige de raccordement de manivelle étant réalisé afin que la manivelle (13) et la tige de raccordement (14) soient parallèles l'une à l'autre lorsque le poteau (5, 6) est en position dressée et en position pratiquement horizontale.

3. Appareil selon la revendication 1 ou 2, caractérisé en ce que le poteau (5, 6) comporte une partie supérieure (5) dont l'extrémité supérieure (8) fait partie, et une partie inférieure (6) dont l'extrémité inférieure (7) fait partie, la partie supérieure (5) pouvant être ajustée dans l'alignement de la partie inférieure (6), si bien que, au moins dans la position dressée du poteau (5, 6), la hauteur du segment de rail (11) par rapport au plancher (V) peut être modifiée.

4. Appareil selon la revendication 3, caractérisé en ce que, pour l'ajustement de la partie supérieure (5) par rapport à la partie inférieure (6), l'appareil comporte un ensemble à vérin (15, 16) dont le cylindre (16) est raccordé à demeure à la partie inférieure (6) et le piston (15) est raccordé à demeure à la partie supérieure (5) ou inversement.

5. Appareil selon la revendication 3, caractérisé en ce que, pour l'ajustement de la partie supérieure (5) par rapport à la partie inférieure (6), l'appareil comporte un second moteur (17) d'entraînement et une broche (18), la broche rotative (18) étant raccordée à la partie inférieure (6) afin qu'elle soit fixée en direction axiale, un écrou (19) de déplacement coopérant avec la broche (18) étant raccordé à demeure à la partie supérieure (5) ou inversement.

6. Appareil selon l'une quelconque des revendication. 3 à 5, caractérisé par un dispositif de blocage (20, 21) destiné à bloquer la partie supérieure (5) par rapport à la partie inférieure (6) dans une certaine position d'ajustement.

7. Appareil selon l'une quelconque des revendications précêdentes, caractérisé en ce que le poteau (5, 6) comporte des bras (23) raccordés de manière pivotante au poteau et destinés à élargir la surface de support de l'objet (K).

8. Appareil selon l'une quelconque des revendications précédentes, caractérisé en ce que, dans le segment de rail (11) qui a deux extrémités libres, deux broches réglables (34) de blocage sont disposées près des extrémités libres, ces broches de blocage pouvant être mises en position de blocage et en position de libération.

9. Système de transport à rail, comprenant un rail de transport (4) qui eat suspendu et un chariot (3) qui est mobile le long du rail de transport (4) ou sur celui-ci et qui comporte des organes (1, 2) de fixation au chariot (3) d'objets (K) à transporter, le système de transport à rail comprenant aussi au moins un appareil selon l'une quelconque des revendications précédentes, une interruption (26) étant réalisée dans le rail de transport (4), cette interruption (26) logeant sous forme ajustée le segment de rail (11) de l'appareil selon l'une quelconque des revendications 1 à 8 lorsque le poteau (5, 6) est en position dressée et permettant ainsi le transport du chariot (3) de long de l'interruption (26), les extrémités du rail de transport (4) qui délimitent l'interruption (26) comprenant des broches réglables (32) de blocage qui peuvent être mises en position de blocage et en position de libération.

10. Système de transport à rail selon la revendication 9, comprenant un rail de transport (4) qui est suspendu et un chariot (3) qui est mobile le long du rail de transport (4) et sur celui-ci dans la direction longitudinale du chariot (3), le chariot (3) comprenant des organes (2) de fixation au chariot d'un objet (K) à transporter, les organes de fixation (2) étant réglables en direction longitudinale par rapport au chariot (3).

11. Système de transport à rail selon la revendication 10, caractérisé en ce que les organes (2) de fixation sont réglables en direction longitudinale par rapport au chariot (3) parce qu'un étrier (38) est monté sur le chariot, cet étrier ayant un côté tourné vers le bas qui porte le dispositif de suspension (39) et dont le côté tourné vers le haut a une fente (41) dans laquelle se loge l'extrémité (37) d'une tige de support (36) pour l'ajustement en direction longitudinale, la tige de support (36) étant raccordée de manière fixe au chariot (3).
